# EUROPEAN PATENT SPECIFICATION

(11) **EP 2 978 714 B1**
(45) Date of publication and mention of the grant of the patent: **24.04.2019**
(21) Application number: 14717636.6
(22) Date of filing: 17.03.2014
(51) Int. Cl.: C02F 1/44, C02F 1/467, B01D 61/02, C02F 1/20, C02F 9/00, C25B 15/08, C02F 101/10, C02F 103/08

(54) **SYSTEM AND METHOD FOR TREATING A SALINE FEED STREAM TO AN ELECTRO-CHLORINATION UNIT**
SYSTEM UND VERFAHREN ZUR BEHANDLUNG EINER SALZHALTIGEN BESCHICKUNG EINER ELEKTROCHLORIERUNGSEINHEIT
SYSTÈME ET PROCÉDÉ POUR TRAITER UN COURANT D'ALIMENTATION D'EAU SALÉE DANS UNE UNITÉ D'ÉLECTROCHLORATION

(30) Priority: 27.03.2013 US 201313851659
(43) Date of publication of application: 03.02.2016
(73) Proprietor: Cameron Solutions, Inc., Houston, TX 77027 (US)
(72) Inventor: WESTON, Robert Charles, William, Maidenhead SL6 1XH (GB); MELLOR, Gary, Howard, Reading Berkshire RG5 3DG (GB); KNOX-HOLMES, Brent, R., East Farndon Northamptonshire LE16 9SH (GB)
(74) Representative: Schlumberger Intellectual Property Department
(86) International application number: PCT/US2014/030575
(87) International publication number: WO 2014/160547

(56) References cited:
- WO-A1-2008/150541
- WO-A1-2011/086346
- WO-A1-2014/008593
- US-A- 5 587 083
- US-A1- 2008 169 202

## Description

### BACKGROUND OF THE INVENTION

This invention relates generally to systems, apparatuses and methods used to treat a saline feed source (e.g. seawater). More specifically, the invention relates to systems and methods used to treat a saline feed source to an electrolytic cell.

Precipitation and subsequent scaling occurs within or downstream of electrolytic cells which are used to produce chlorine or chlorine-produced oxidants from saline water and, in particular, from seawater. The scaling negatively affects the performance of the cells and downstream processing equipment.

The cause of the precipitation is a rise in pH at the cathode of the electrolytic cell as a result of the electrolytic process. This is a common problem where untreated seawater passes over a cathode.

Documents US2008/0169202 A1, US5587083 and WO2014/008593 A1disclose systems and methods using nanofiltration sulfate removal steps prior to an electrolysis step.

### SUMMARY OF THE INVENTION

A system and method made according to this invention reduces scaling within, or downstream of an electrolytic cell used to produce chlorine or chlorine-produced oxidants from saline water and, in particular, seawater.

According to the invention there is provided a system and a method according to claims 1 and 4.

### BRIEF DESCRIPTION OF THE DRAWINGS

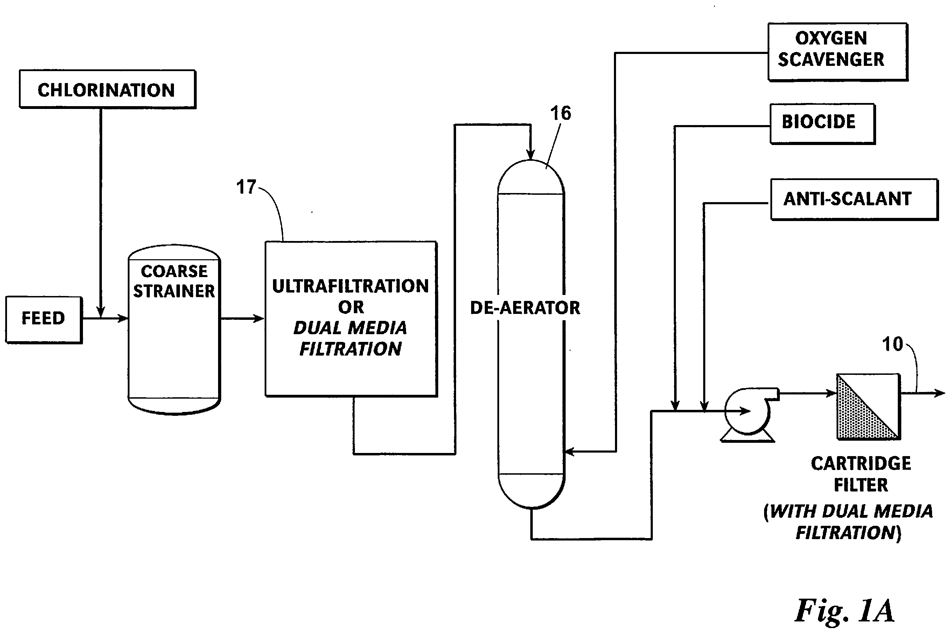

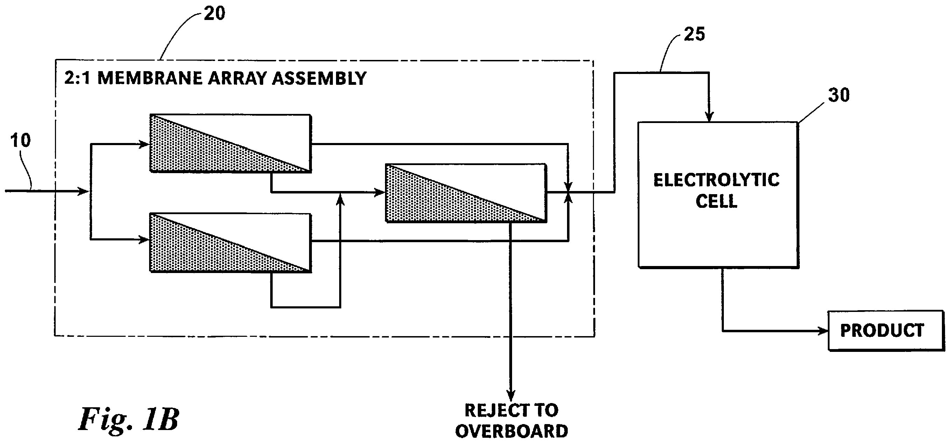

FIG. 1A is a process diagram of a preferred embodiment of optional pre-treatment steps of a system and method made according to this invention. A saline feed stream (e.g. seawater) is passed through an ultrafiltration or dual media filtration system and optionally a deaerator prior to the stream being routed to the membrane system of FIG. 1B.
FIG. 1B is a process diagram of an embodiment a system and method made according to this invention. A saline feed stream is pre-treated using a nanofiltration sulfate removal membrane system and the permeate feed stream is then routed to a piece of downstream equipment housing one or more electrolytic cells, such as having an electro- chlorination unit ("ECU").

### Elements and Element Numbering Used in the Drawings

- 10: Saline feed stream
- 16: Deaerator
- 17: Ultrafiltration or dual media filtration system
- 20: Sulfate removal membrane system or array
- 25: Permeate feed stream exiting 20
- 30: Electrolytic cell

### DETAILED DESCRIPTION OF THE PREFERRED EMBODIMENTS

A system and method made according to this invention addresses the precipitation of relatively insoluble calcium and magnesium salts from saline water and, in particular, from seawater.

Referring to FIG. 1B, the system and method include the steps of pre-treating a saline feed stream 10 with a nanofiltration system employing a sulfate removal membrane system 20. A NATCO® sulfate removal system (Cameron Process Systems, Houston, Texas) is a suitable nanofiltration sulfate removal membrane system 20.

The softened low sulfate seawater (permeate stream) 25 produced in the nanofiltration sulfate removal membrane system 20 is then routed to equipment such as an ECU housing one or more electrolytic cells 30. Optionally, the permeate stream 25 from the membrane system 20 may be de-aerated before being routed to the cells 30.

The electrolytic cell 30 is not divided (with a membrane between the anode and cathode). Divided cells are not presently used with raw seawater due to the issue of membrane fouling, but can be viable if the scaling tendency has been reduced.

Examples of an electrolytic cell well suited for use in this invention is a SEACELL® electrolytic cell made (Cameron Process Systems, Houston, Texas). This particular cell is used on a Cameron Process Systems (Houston, Texas) electrochlorinator producing only chlorine and on a BFCC™ copper plus chlorine electrochlorinator (Cameron Process Systems).
Referring to FIG. 1A, the saline feed stream 10 may optionally have been pre-treated by using one or more pre-treatment steps prior to it being routed to the membrane system 20. For example, the stream 10 may be routed to a deaerator 16 and de-aerated prior to it being routed to the membrane system 20. Additionally, the saline feed stream 10 is passed through an ultrafiltration or dual media filtration system 17 prior to being routed to the membrane system 20.

## Claims

1. A system to reduce scaling within or downstream of an electrolytic cell (30), the system comprising:
a first filtration system arranged to filter a saline feed stream (10), the first filtration system being an ultrafiltration system or a dual media filtration system;
a nanofiltration sulfate removal membrane system (20) arranged to receive the filtered saline feed stream,
**characterised by** the nanofiltration sulfate removal membrane system having a first stage and a second stage, the first stage having two sulfate removal membranes arranged in parallel with one another, the second stage having one sulfate removal membrane arranged in series to the first stage to receive a reject stream from the first stage; and
one or more undivided electrolytic cells (30) arranged to receive a permeate stream (25) from the first and second stages of the nanofiltration sulfate removal membrane system (20).

2. A system according to claim 1, further comprising a de-aerator (16) located between the first system and the nanofiltration sulfate removal membranes (20).

3. A system according to claim 1 wherein the one or more undivided electrolytic cells (30) are arranged as part of an electro-chlorination unit.

4. A method of reducing scaling within or downstream of an electrolytic cell (30) in a system according to claim 1, the method comprising the step of routing a saline feed stream (10) to a nanofiltration sulfate removal system (20), **characterised by** the nanofiltration sulfate removal system having a first stage and second stage, the second stage arranged to receive a reject stream from the first stage, the first stage having two nanofiltration sulfate removal membranes arranged in parallel, the second stage having one nanofiltration sulfate removal membrane arranged in series to the first stage and wherein the nanofiltration sulfate removal system (20) is located upstream of at least one electrolytic cell (30), the electrolytic cell being undivided and arranged to receive a permeate feed stream (25) exiting the first and second stages of the nanofiltration sulfate removal system (20).

5. A method according to claim 5 further comprising the step of de-aerating the saline feed stream (10) prior to routing the saline feed stream to the nanofiltration sulfate removal system (20).

6. A method according to claim 5 further comprising the step of de-aerating the permeate feed stream (25) prior to routing the permeate feed stream (25) to the electrolytic cell (30).

## Patentansprüche

1. System zum Reduzieren von Scaling innerhalb oder stromabwärts einer Elektrolysezelle (30), wobei das System umfasst:
ein erstes Filtrationssystem, das zum Filtern eines Salzlösungszustroms (10) angeordnet ist, wobei das erste Filtrationssystem ein Ultrafiltrationssystem oder ein Zweifachfiltrationssystem ist;
ein Nanofiltrationssulfatentfernungsmembransystem (20), das zum Empfangen des gefilterten Salzlösungszustroms angeordnet ist,
**dadurch gekennzeichnet, dass** das Nanofiltrationssulfatentfernungsmembransystem eine erste Stufe und eine zweite Stufe aufweist, wobei die erste Stufe zwei miteinander parallel geschaltete Sulfatentfernungsmembranen aufweist, wobei die zweite Stufe eine mit der ersten Stufe in Reihe geschaltete Sulfatentfernungsmembran aufweist, um einen Ausschussstrom aus der ersten Stufe zu empfangen; und
eine oder mehrere ungeteilte Elektrolysezellen (30), die zum Empfangen eines Permeatstroms (25) aus der ersten und zweiten Stufe des Nanofiltrationssulfatentfernungsmembransystems (20) angeordnet sind.

2. System gemäß Anspruch 1, das ferner einen sich zwischen dem ersten System und den Nanofiltrationssulfatentfernungsmembranen (20) befindenden Entgaser (16) umfasst.

3. System gemäß Anspruch 1, wobei die eine oder die mehreren ungeteilten Elektrolysezellen (30) als Teil einer Elektrochlorungseinheit angeordnet sind.

4. Verfahren zum Reduzieren von Scaling innerhalb oder stromabwärts einer Elektrolysezelle (30) in einem System gemäß Anspruch 1,
wobei das Verfahren den Schritt eines Leitens eines Salzlösungszustroms (10) zu einem Nanofiltrationssulfatentfernungssystem (20) umfasst,
**dadurch gekennzeichnet, dass** das Nanofiltrationssulfatentfernungssystem eine erste Stufe und eine zweite Stufe aufweist, wobei die zweite Stufe zum Empfangen eines Ausschussstroms aus der ersten Stufe angeordnet ist, wobei die erste Stufe zwei parallel geschaltete Nanofiltrationssulfatentfernungsmembranen aufweist, die zweite Stufe eine mit der ersten Stufe in Reihe geschaltete Nanofiltrationssulfatentfernungsmembran aufweist, und wobei das Nanofiltrationssulfatentfernungssystem (20) sich stromaufwärts der wenigstens einen Elektrolysezelle (30) befindet, wobei die Elektrolysezelle ungeteilt ist und zum Empfangen eines aus der ersten und zweiten Stufe des Nanofiltrationssulfatentfernungssystems (20) austretenden Permeatzustroms (25) angeordnet ist.

5. Verfahren gemäß Anspruch 4, das ferner den Schritt eines Entgasens des Salzlösungszustroms (10) vor dem Leiten des Salzlösungszustroms zum Nanofiltrationssulfatentfernungssystem (20) umfasst.

6. Verfahren gemäß Anspruch 4, das ferner den Schritt eines Entgasens des Permeatzustroms (25) vor dem Leiten des Permeatzustroms (25) zur Elektrolysezelle (30) umfasst.

## Revendications

1. Système permettant de réduire l'entartrage à l'intérieur ou en aval d'une cellule électrolytique (30), le système comprenant :
un premier système de filtration conçu pour filtrer un flux d'alimentation saline (10), le premier système de filtration étant un système d'ultrafiltration ou un système de filtration à deux milieux ;
un système de membranes d'élimination de sulfate de nanofiltration (20) conçu pour recevoir le flux d'alimentation saline filtré, **caractérisé en ce que** le système de membranes d'élimination de sulfate de nanofiltration présente un premier étage et un second étage, le premier étage ayant deux membranes d'élimination de sulfate disposées en parallèle, le second étage ayant une membrane d'élimination de sulfate disposée en série avec le premier étage pour recevoir un flux de rejet provenant du premier étage ; et
une ou plusieurs cellules électrolytiques non divisées (30) conçues pour recevoir un flux de perméat (25) à partir des premier et second étages du système de membranes d'élimination de sulfate (20).

2. Système selon la revendication 1, comprenant en outre un désaérateur (16) situé entre le premier système et les membranes d'élimination de sulfate (20).

3. Système selon la revendication 1, dans lequel la ou les cellules électrolytiques non divisées (30) sont conçues comme faisant partie d'une unité d'électrochloration.

4. Procédé de réduction de l'entartrage à l'intérieur ou en aval d'une cellule électrolytique (30) dans un système selon la revendication 1, le procédé comprenant l'étape d'acheminement d'un flux d'alimentation saline (10) à un système d'élimination de sulfate de nanofiltration (20), **caractérisé en ce que** le système d'élimination de sulfate de nanofiltration présente un premier étage et un second étage, le second étage étant conçu pour recevoir un flux de rejet provenant du premier étage, le premier étage ayant deux membranes d'élimination de sulfate de nanofiltration disposées en parallèle, le second étage ayant une membrane d'élimination de sulfate de nanofiltration disposée en série avec le premier étage et dans lequel le système d'élimination de sulfate de nanofiltration, (20) est situé en amont d'au moins une cellule électrolytique (30), la cellule électrolytique étant non divisée et conçue pour recevoir un flux d'alimentation de perméat (25) sortant des premier et second étages du système d'élimination de sulfate de nanofiltration (20).

5. Procédé selon la revendication 4, comprenant en outre l'étape de désaération du flux d'alimentation saline (10) avant l'acheminement du flux d'alimentation saline vers le système d'élimination de sulfate de nanofiltration (20).

6. Procédé selon la revendication 4, comprenant en outre l'étape de désaération du flux d'alimentation de perméat (25) avant l'acheminement du flux d'alimentation de perméat vers la cellule électrolytique (30).
